# EUROPÄISCHE PATENTSCHRIFT

(11) **EP 2 018 984 B1**
(45) Veröffentlichungstag und Bekanntmachung des Hinweises auf die Patenterteilung: **12.09.2012**
(21) Anmeldenummer: 08012977.8
(22) Anmeldetag: 18.07.2008
(51) Int. Cl.: B60H 1/00

(54) **Heiz- oder Klimaanlage, insbesondere für den Einsatz in einem Kraftfahrzeug**
Heating or air conditioning device, particularly for use in a motor vehicle
Climatisation ou chauffage, en particulier pour l'utilisation dans un véhicule automobile

(30) Priorität: 25.07.2007 DE 102007035220
(43) Veröffentlichungstag der Anmeldung: 28.01.2009
(73) Patentinhaber: Behr GmbH & Co. KG, 70469 Stuttgart (DE)
(72) Erfinder: Schmalzried, Michael, 73463 Westhausen (DE)
(74) Vertreter: Grauel, Andreas

(56) Entgegenhaltungen:
- DE-A1- 4 431 734
- DE-A1- 19 817 896
- FR-A1- 2 792 878
- GB-A- 2 320 323

## Beschreibung

Die vorliegende Erfindung betrifft eine Heiz- oder Klimaanlage, wie sie insbesondere bei Kraftfahrzeugen zum Einsatz kommt.

Die Klimatisierung eines Fahrzeuginnenraums stellt insbesondere für den Fondbereich hohe Anforderungen an eine Klimaanlage. Die Luft für den Fondbereich wird in der Regel in einem Frontklimagerät gemischt und anschließend dem Fondbereich zugeführt. Die Mischung und Verteilung der klimatisierten Luft für den Fondbereich erfordert im Frontklimagerät weitere Klappen, welche zusätzlichen Einbauraum im Frontklimagerät beanspruchen.

Eine derartige Klimaanlage ist beispielsweise aus der GB 2320 323 bekannt.

Aus der DE 10 2004 028 784 A1 ist daher eine Vorrichtung zur Luftzuführung in einen Innenraum eines Fahrzeugs bekannt, die mit Hilfe von thermisch getrennten Kanälen für Warmluft und für Kaltluft vom Frontklimagerät ausgehend den Fondbereich eines Fahrzeugs mit klimatisch aufbereiteter Luft versorgt. Die Mischung dieser Luftströme erfolgt dann in einer Mischkammer im Fondbereich, wobei die Luftzufuhr vom Frontklimagerät in diese Mischkammer durch ein Zusatzgebläse, welches der Mischkammer vorgeschaltet ist, unterstützt wird.

Die Abgabe der gemischten Luft für den Fondbereich erfolgt über eine Vielzahl von Luftauslässen, welche in den gesamten Fondbereich münden. Diese Konfiguration erlaubt zwar die Wahl einer bestimmten Temperatur für die gesamte austretende Luft im Fondbereich, allerdings erfolgt keine Luftverteilung in Abhängigkeit von der gewählten Temperatur.

So kann beispielsweise sehr warme Luft auch in den Oberkörperbereich im Fond austreten, was insbesondere bei längerer Beaufschlagung als unangenehm empfunden werden kann. Wird dagegen die Temperatur im Fondbereich im Wesentlichen durch die kalte Luft bestimmt, so wird dies insbesondere im Fußbereich des Fonds als unangenehm empfunden.

Die vorliegende Erfindung stellt sich die Aufgabe, eine verbesserte Heiz-oder Klimaanlage, insbesondere für ein Fahrzeug, zur Verfügung zu stellen, welche auf konstruktiv einfache Weise den thermischen Komfort in einem Bereich des Fahrzeuges, insbesondere im Fondbereich erhöht.

Diese Aufgabe wird erfindungsgemäß durch eine Heiz- oder Klimaanlage, insbesondere für ein Kraftfahrzeug, gemäß Anspruch 1 gelöst.

Eine erfindungsgemäße Heiz- und Klimaanlage, welche insbesondere in Kraftfahrzeugen vorgesehen ist, weist einen Wärmetauscher, ein Temperaturmisch- und Luftverteilerelement, wenigstens einen Strömungskanal für Kaltluft und wenigstens einen Strömungskanal für Warmluft zwischen dem Wärmetauscher und dem Temperaturmisch- und Luftverteilerelement auf, wobei das Temperaturmisch- und Luftverteilerelement ferner einen ersten Ausgang, einen zweiten Ausgang und eine Klappenanordnung mit einer Temperaturmischklappe aufweist. Die Temperaturmischklappe kann in eine erste Endstellung, in der der Strömungskanal für Kaltluft verschlossen ist, in eine zweite Endstellung, in der der Strömungskanal für Warmluft verschlossen ist, sowie Zwischenstellungen, in denen der Strömungskanal für Kaltluft und der Strömungskanal für Warmluft jeweils nur teilweise verschlossen sind, bewegt werden. Das Temperaturmisch- und Luftverteilerelement weist weiter eine mit der Temperaturmischklappe gekoppelte Verteilerklappe auf, die in eine erste Endstellung, eine zweite Endstellung sowie eine Zwischenstellung bewegt werden kann, wobei in der ersten Endstellung der Temperaturmischklappe der zweite Ausgang von der Verteilerklappe verschlossen ist, in der zweiten Endstellung der Temperaturmischklappe der erste Ausgang verschlossen ist, und in den Zwischenstellungen der Temperaturmischklappe die Verteilerklappe entsprechende Zwischenstellungen einnimmt, in denen der erste und zweite Ausgang jeweils nur teilweise verschlossen ist.

Ein erfindungsgemäßes Temperaturmisch- und Luftverteilerelement erlaubt es, die Mischung der Luft für den Fondbereich des Fahrzeugs in den Fondbereich zu verlagern, wodurch im Frontklimagerät Bauraum eingespart werden kann. Der vorhandene Raum für die Mischkammer im Frontklimagerät kann somit vorteilhafterweise komplett für die Mischung der Luftströme der ersten und zweiten Zone im Fahrzeug verwendet werden. Zusätzlich ist es nun möglich, die austretenden Luftströme in Abhängigkeit von der gewünschten Temperatur in verschiedene Bereiche des Fonds zu verteilen, so dass der Komfort erhöht wird.

Ein Strömungskanal zwischen dem Frontklimagerät und dem Temperaturmisch- und Luftverteilerelement weist eine Längsrichtung auf, die bevorzugt mit der Hauptströmungsrichtung der durchtretenden Luft identisch ist. Der Strömungskanal ist vorzugsweise in Gestalt eines im Wesentlichen rechteckigen Querschnitts ausgebildet, es sind aber auch davon abweichende Querschnittsformen möglich. Die Längsachse des Strömungskanals kann gerade oder gekrümmt verlaufen.

In einer Ausführungsform der vorliegenden Erfindung weist die Heiz- oder Klimaanlage vorzugsweise mehrere Strömungskanäle für Warmluft und/oder vorzugsweise mehrere Strömungskanäle für Kaltluft auf. Zur Begünstigung der Schichtung der austretenden Luft, welche insbesondere am Ausgang zum Fußbereich des Fonds angestrebt wird, kann sich dort vorteilhafterweise bei Mischzuständen eine höhere Temperatur gegenüber der Temperatur für die Belüftung des Fonds ergeben, da der erste Ausgang direkt an einem Kanal für den Luftstrom mit Warmluft liegen kann. Dadurch kann der thermische Komfort im Fondbereich erhöht werden.

Vorzugsweise sind je ein Strömungskanal für Warmluft und ein Strömungskanal für Kaltluft wechselweise durch eine Temperaturmischklappe verschließbar. Dies erlaubt eine Mischung von unterschiedlichen Luftströmen mit einem reduzierten Bauaufwand. Zusätzlich kann die Luftmischung im Temperaturmisch- und Luftverteilerelement für den Fondbereich unmittelbar dort stattfinden, wodurch zum einen die entsprechenden Klappen und Steuerelemente im Frontklimagerät entfallen und infolgedessen das Frontklimagerät kompakter bauen kann. Zum anderen kann die gemischte Luft entlang eines kurzen Strömungskanals an den ersten und/oder zweiten Ausgang abgegeben werden, wodurch die thermischen Verluste minimal sind.

In einer bevorzugten Ausführungsform der vorliegenden Erfindung sind wenigstens zwei Verteilerklappen der Klappenanordnung derart miteinander gekoppelt, dass diese wenigstens zwei Verteilerklappen der Klappenanordnung sich gegensinnig zueinander bewegen. Diese kinematische Gestaltung der Klappenanordnung erlaubt es, dass ein symmetrischer Aufbau der Temperaturmisch- und Luftverteilerelement erzielt und eine Vielzahl von Ausgängen aus dem Temperaturmisch- und Luftverteilerelement mit einer geringen Anzahl an Klappen bei gesteigertem Komfort für die Passagiere im Fondbereich geöffnet oder geschlossen werden kann.

Bevorzugt weist das Temperaturmisch- und Luftverteilerelement mehrere erste Ausgänge und/oder mehrere zweite Ausgänge auf. So ist es insbesondere im Fall des ersten Ausgangs vorteilhaft, wenn für einen Fußbereich im Fond sowohl ein Ausgang für die linke als auch für die rechte Seite zur Verfügung stehen.

Vorzugsweise sind je ein erster Ausgang und ein zweiter Ausgang wechselweise durch eine Verteilerklappe verschließbar. Diese Umsetzung der Verteilungsfunktion der gemischten Luft benötigt somit ebenfalls einen reduzierten Bauaufwand für das Temperaturmisch- und Luftverteilerelement. Ferner erlaubt diese eine Verteilung der gemischten Luft in Abhängigkeit von der gewünschten Temperatur in unterschiedliche Bereiche des Fonds und kann somit vorteilhafterweise den thermischen Komfort für die Passagiere im Fondbereich erhöhen.

Bevorzugt mündet der erste Ausgang in einen Fußbereich des Fonds und der zweite Ausgang in einen Belüftungsbereich im Fond des Fahrzeugs. Diese Anordnung der Ausgänge erlaubt den Aufbau einer Mehrzonen-Klimaanlage für das Fahrzeug, wodurch der thermische Komfort im Fondbereich gesteigert werden kann.

In einer bevorzugten Ausführungsform sind die Verteiler- und Temperaturmischklappen der Klappenanordnung um je eine Drehachse schwenkbar, um somit die Ausgänge bzw. die Strömungskanäle für Kalt- und Warmluft zu verschließen. Die Aufnahme bzw. Abgabe von einem oder mehreren Luftströmen kann mittels einer Drehbewegung des zugehörigen Stellelements leicht angesteuert werden und Zwischenstellungen für das Verschließen eines Strömungskanals bzw. eines Ausgangs lassen sich auf diese Weise leicht einstellen.

Die Drehbewegungen von wenigstens zwei Klappen der Vielzahl von Klappen sind vorzugsweise über ein Getriebe miteinander gekoppelt. In einer bevorzugten Ausführungsform der vorliegenden Erfindung sind wenigstens zwei Klappen über eine Zahnradverbindung miteinander gekoppelt. Dies erlaubt u.a. eine einfache kinematische Umsetzung der vorstehend erwähnten gegensinnigen Bewegung von wenigstens zwei Verteilerklappen. Es kann somit auch vorteilhafterweise eine aufwändige Steuerung für die Bewegung der Verteilerklappen entfallen.

In einer alternativen Ausführungsform der vorliegenden Erfindung werden die Bewegungen der Verteilerklappen über eine Kurvenscheibe gesteuert, wodurch aufgrund der Bewegung der Verteilerklappen die Eigenschaft der Temperaturmisch- und Luftverteilerelements hinsichtlich des Mischens und Verteilens der Luft festgelegt werden kann.

Vorzugsweise wird in der ersten Endstellung der Verteilerklappe ein Luftstrom in eine erste Abgaberichtung und in der zweiten Endstellung der Verteilerklappe ein Luftstrom in eine zweite Abgaberichtung gelenkt wird, wobei die erste Abgaberichtung und die zweite Abgaberichtung verschieden. Dadurch kann vorteilhafterweise die Strömungsrichtung des austretenden Luftstroms beeinflusst werden, um beispielsweise Verwirbelungen zu vermeiden oder gezielt zu erzeugen.

Das Temperaturmisch- und Luftverteilerelement ist bevorzugt im Fondbereich des Fahrzeugs angeordnet, wodurch der hierfür bislang erforderliche Baumraum im Frontklimagerät entfallen kann. Somit kann das Frontklimagerät kompakter bauen.

Vorzugsweise weisen die Klappen der Klappenanordnung im Wesentlichen die Form von Segmenten eines geschlossenen Hohlzylinders auf. In radialer Richtung sind die Segmente an ihrem äußeren Ende durch eine geschlossene Wandung begrenzt, welche in einer alternativen Ausführungsform auch wenigstens eine Aussparung aufweisen kann.

Bevorzugt sind die jeweiligen Schwenkachsen der Klappen der Klappenanordnung parallel zueinander angeordnet.

Das Temperaturmisch- und Luftverteilerelement ist bevorzugt zentral oder dezentral bedienbar. In einer besonders bevorzugten Ausführungsform der Heiz- oder Klimaanlage ist das Temperaturmisch- und Luftverteilerelement insbesondere vom hinteren Sitzbereich aus bedienbar. Dadurch können die Passagiere im Fond die gewünschte lokale Klimasituation selbstständig wählen und vorteilhafterweise der Komfort im Fondbereich gesteigert werden.

Vorzugsweise sind die Querschnittsflächen des ersten Ausgangs und des zweiten Ausgangs des Temperaturmisch- und Luftverteilerelements im Wesentlichen parallel.

Die Querschnittsflächen des ersten Ausgangs und des zweiten Ausgangs des Temperaturmisch- und Luftverteilerelements sind bevorzugt im Wesentlichen rechteckig. Es sind aber auch davon abweichende Gestaltungen möglich, beispielsweise kreisrunde Querschnitte oder konvex-konkav gestaltete Querschnitte.

Vorzugsweise sind wenigstens zwei Klappen der Klappenanordnung über ein Verbindungsteil miteinander gekoppelt. Die wenigstens zwei Klappen sind bevorzugt starr über das Verbindungsteil miteinander gekoppelt. Dadurch wird eine gekoppelte Bewegung einer ersten Klappe mit wenigstens einer zweiten Klappe erzielt, wodurch der Steuerungsaufwand für die Bewegung der Klappen für die Luftmischung in dem Temperaturmisch- und Luftverteilerelement verringert werden kann.

In einer bevorzugten Ausführungsform ist das Verbindungsteil im Inneren des Temperaturmisch- und Luftverteilerelements angeordnet. Dadurch kann das Gehäuse für das Temperaturmisch- und Luftverteilerelement kompakter bauen und es sind keine Durchbrüche in dem Gehäuse für die Verbindung zwischen der Klappenanordnung und dem Verbindungsteil erforderlich. In einer weiteren Ausführungsform ist das Verbindungsteil auf der Außenseite des Gehäuses des Temperaturmisch- und Luftverteilerelements angeordnet.

Vorzugsweise sind der wenigstens eine Strömungskanal für Kaltluft und der wenigstens eine Strömungskanal für Warmluft durch eine Trennwand voneinander getrennt.

Diese Gestaltung der Strömungskanäle erlaubt das Mischen und Verteilen der getrennt zugeführten Luftströme mit unterschiedlicher Temperatur vom Frontklimagerät in dem Temperaturmisch- und Luftverteilerelement. Dadurch kann das Mischen vorteilhafterweise in dem Temperaturmisch- und Luftverteilerelement im Fondbereich des Fahrzeugs erfolgen, wodurch der hierfür bislang erforderliche Bauraum im Frontklimagerät nicht mehr vorgehalten werden muss. Somit kann das Frontklimagerät kompakter bauen.

Weitere Vorteile, Merkmale und Anwendungsmöglichkeiten der vorliegenden Erfindung ergeben sich aus der nachfolgenden Beschreibung in Zusammenhang mit den Figuren. Hierzu zeigt, teilweise schematisiert:
- Fig. 1: eine perspektivische Ansicht einer Klappenanordnung einer Heiz - oder Klimaanlage nach einer Ausführung der vorliegenden Erfindung,
- Fig. 2: eine perspektivische Ansicht eines Temperaturmisch- und Luftverteilerelements einer Heiz- oder Klimaanlage nach einer zweiten Ausführungsform der vorliegenden Erfindung,
- Fig.3: eine Schnittansicht A-A von oben eines Temperaturmisch- und Luftverteilerelements mit einer Klappenanordnung gemäß Fig. 1,
- Fig.4: eine Schnittansicht A-A von oben eines Temperaturmisch- und Luftverteilerelements mit einer Klappenanordnung gemäß Fig. 2,
- Fig. 5: eine Schnittansicht A-A einer Ausführungsform der Heiz- oder Klimaanlage der vorliegenden Erfindung gemäß Fig. 6 und
- Fig. 6: eine Draufsicht der Heiz- oder Klimaanlage gemäß Fig. 5.

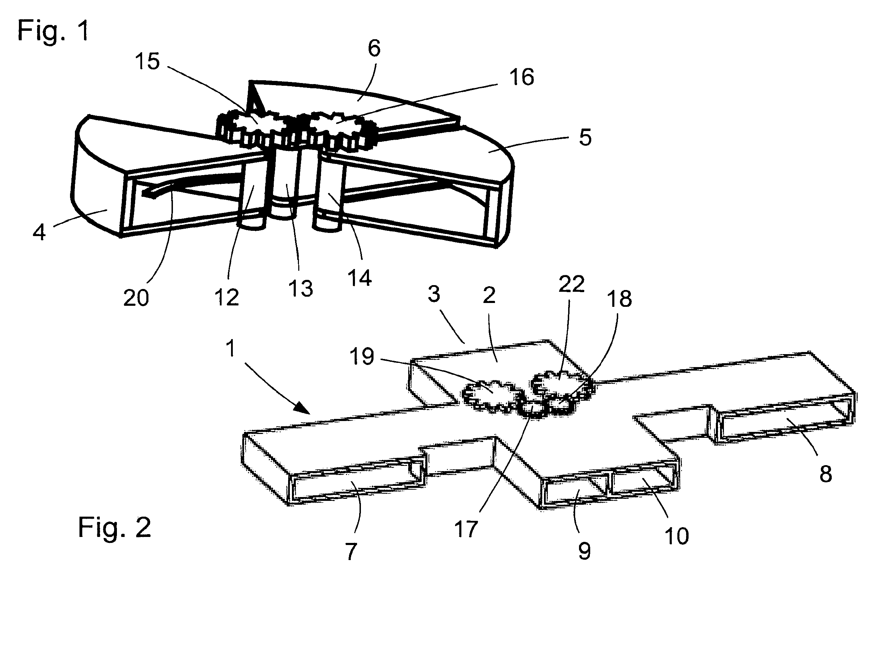

Fig. 1 zeigt eine perspektivische Ansicht einer Klappenanordnung für ein Temperaturmisch- und Luftverteilerelement 1 einer Heiz- oder Klimaanlage nach einer Ausführungsform der vorliegenden Erfindung. Die Klappenanordnung weist zwei Verteilerklappen 4, 5 und eine Temperaturmischklappe 6 auf, welche jeweils die Form eines Segments eines geschlossenen Hohlzylinders aufweisen. Jede der Klappen 4, 5, 6 der Klappenanordnung weist an einem Ende jeweils eine Drehachse 12, 13, 14 auf. Die Klappen 4, 5, 6 der Klappenanordnung sind jeweils in radialer Richtung über eine Wandung und in axialer Richtung über eine obere und eine untere Begrenzungsfläche begrenzt. Die Drehachsen 12, 13, 14 sind fest mit den Klappen 4, 5, 6 der Klappenanordnung verbunden und in geringer Entfernung zueinander angeordnet. Die Temperaturmischklappe 6 und die Verteilerklappe 4 sind über ein Verbindungselement 20 miteinander starr gekoppelt. An einem Ende der Drehachsen 12, 14 ist jeweils ein Zahnrad 15, 16 ausgebildet. Die Zahnräder 15, 16 wirken derart zusammen, dass aufgrund der Kopplung der Klappen 4 und 6 über das Verbindungselement 20 bei einer Drehbewegung der Temperaturmischklappe 6 die Verteilerklappen 4, 5 gegensinnig verschwenken.

Fig. 2 zeigt eine perspektivische Ansicht eines Temperaturmisch- und Luftverteilerelements 1 einer Heiz- oder Klimaanlage einer weiteren Ausführungsform der vorliegenden Erfindung. Die Temperaturmisch- und Luftverteilerelement 1 weist ein Gehäuse 2 für das Temperaturmisch- und Luftverteilerelement 1 auf, in dem eine Klappenanordnung zur Mischung und Verteilung von Luftströmen, sowie mehrere Ausgänge 7, 8, 9, 10 ausgebildet sind. Das Gehäuse 2 des Temperaturmisch- und Luftverteilerelements 1 weist im Wesentlichen eine kreuzförmige Gestalt auf. An einem Querende des Gehäuses 2 des Temperaturmisch- und Luftverteilerelements ist ein Einlass 3 ausgebildet, welcher je einen Strömungskanal für Warmluft und einen Strömungskanal für Kaltluft fortsetzt, die vom Frontklimagerät (nicht dargestellt) ausgehen. Diese eintretenden Luftströme werden im Gehäuse 2 des Temperaturmisch- und Luftverteilerelements zu einer Mischkammer geführt, welche im Inneren dieses Gehäuses 2 ausgebildet ist. Am gegenüberliegenden Querende des Gehäuses 2 des Temperaturmisch- und Luftverteilerelements 1 sind vier Ausgänge 7, 8, 9, 10 ausgebildet, die jeweils individuell klimatisierte Luftströme an den Fondbereich des Fahrzeugs abgeben können. Die Querschnitte der Ausgänge 7, 8, 9, 10 sind rechteckförmig. Die Querschnittsfläche des Einlasses 3 und die Querschnittsflächen der Ausgänge 7, 8, 9, 10 sind im Wesentlichen parallel zueinander.

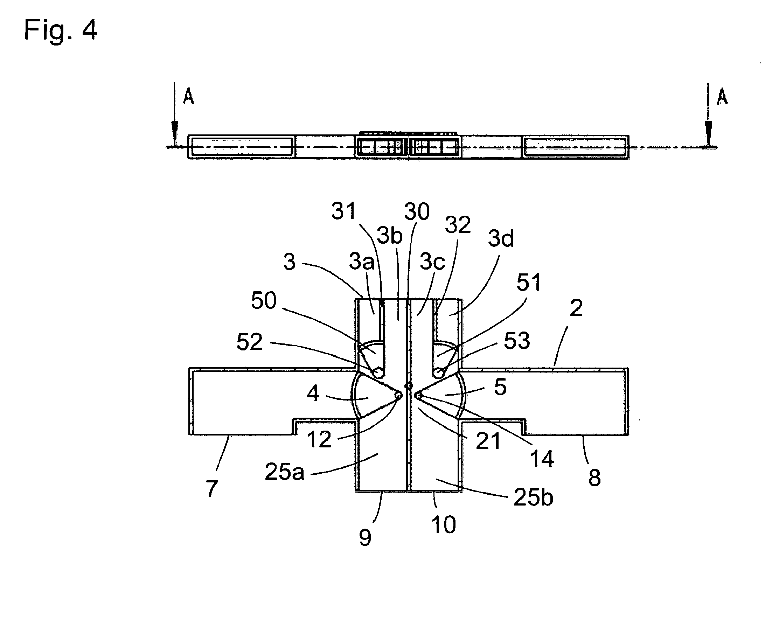

Im Inneren des Gehäuses 2 des Temperaturmisch- und Luftverteilerelements 1 ist ebenfalls eine Klappenanordnung ausgebildet, welche in Fig. 4 dargestellt ist. Die Klappen der Klappenanordnung sind jeweils über Zahnräder 17, 18, 19, 22, die an einem Ende der jeweiligen Drehachse einer Klappe ausgebildet sind, miteinander gekoppelt. Die Zahnräder 17, 18 und Zahnräder 19, 22 weisen jeweils denselben Durchmesser und dieselbe Zähnezahl auf.

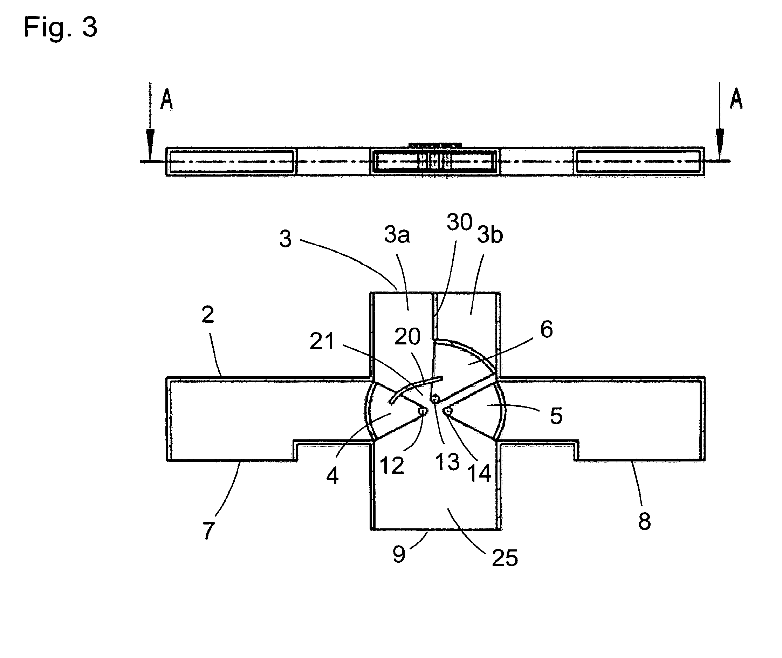

Fig. 3 zeigt eine Schnittansicht von oben entlang der Schnittlinie A-A für ein erfindungsgemäßes Temperaturmisch- und Luftverteilerelement 1 mit einer Klappenanordnung gemäß Fig. 1. Die Gestalt des Gehäuses 2 des Temperaturmisch- und Luftverteilerelements 1 ist identisch mit dem vorstehend beschriebenen Gehäuse von Fig. 2. Es wird im Folgenden deshalb nur die Ausgestaltung des Inneren des Gehäuses 2 des Temperaturmisch- und Luftverteilerelements 1 beschrieben.

Im Inneren des Temperaturmisch- und Luftverteilerelements 1 befindet sich eine Mischkammer 21, welche aus der Klappenanordnung und Mischkammer-Auslässen, welche über Strömungskanäle im Inneren des Gehäuses 2 für das Temperaturmisch- und Luftverteilerelement 1 mit den Ausgängen 7, 8, 9 verbunden sind, gebildet wird. Die Klappenanordnung weist die zwei Verteilerklappen 4, 5 und die Temperaturmischklappe 6 auf, mit jeweils einer Drehachse 12, 13, 14.

Der Einlass 3 wird durch eine Trennwand 30 in einen Strömungskanal für Kaltluft und einen Strömungskanal für Warmluft geteilt, die vom Frontklimagerät (nicht dargestellt) kommende Strömungskanäle 3a bzw. 3b fortsetzen. Die Längsachse der Trennwand 30 ist parallel zur Querachse des Gehäuses 2 und erstreckt sich vom Einlass 3 bis zur Klappenanordnung in Richtung der Querachse des Gehäuses 2. Die Querschnittsfläche des Einlasses 3 wird durch die Trennwand 30 jeweils halbiert.

Die Temperaturmischklappe 6 kann zwischen zwei Endstellungen verschwenkt werden, wobei wechselweise die angrenzenden Strömungskanäle geöffnet oder geschlossen werden. Die Temperaturmischklappe 6 ist über das Verbindungselement 20 mit der Verteilerklappe 4 starr gekoppelt. Je nach Stellung der Temperaturmischklappe 6 verschwenken die Verteilerklappen 4, 5 gegensinnig und geben die Mischkammer-Auslässe frei oder verschließen diese.

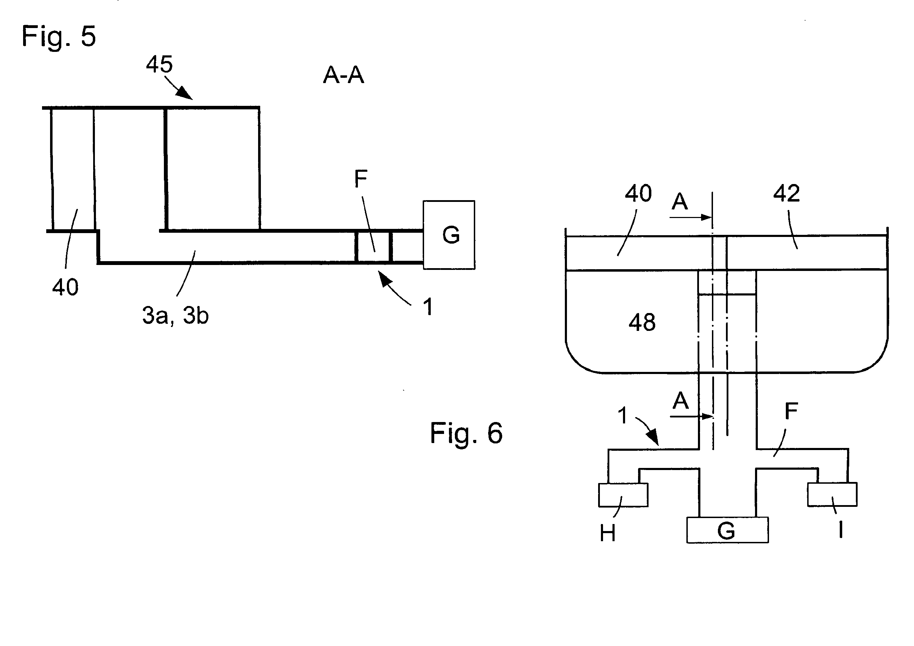

Angrenzend an die Mischkammer 21 ist strömungsausgangsseitig in Richtung der Strömungskanäle vom Frontklimagerät 3a, 3b ein Strömungskanal 25 ausgebildet, welcher in den zweiten Ausgang 9 mündet und zur Luftversorgung einer Belüftung des Fonds dient. Senkrecht zum Strömungskanal 25 und an die Mischkammer 21 angrenzend sind zwei Strömungskanäle ausgebildet, welche zur Luftversorgung im Bereich Fuß-Fond links und rechts (siehe hierzu auch Fig. 6) dienen.

In Fig. 4 ist eine Schnittansicht von oben der Ausführungsform eines Temperaturmisch- und Luftverteilerelements 1 gemäß Fig. 2 entlang der Schnittlinie A-A dargestellt.

Der Einlass 3 wird durch drei Trennwände 30, 31, 32 in Strömungskanäle unterteilt, welche die vom Frontklimagerät (nicht dargestellt) kommenden Strömungskanäle 3a bis 3d fortsetzen und den Einlass 3 mit der Mischkammer 21 verbinden. In den äußeren Strömungskanälen 3a, 3d werden Luftströme mit Warmluft geführt, während die innenliegenden Strömungskanäle 3b, 3c kalte Luft führen und durch Trennwände 31, 32 getrennt sind. Die Strömungskanäle führen die Luftströme zur Mischkammer 21 hin.

Die Trennwand 30 ist entlang einer Mittelachse des Gehäuses 2 des Temperaturmisch- und Luftverteilerelements 1 ausgebildet und teilt den Strömungskanal 25, welcher auf der Strömungsausgangsseite der Mischkammer 21 in Richtung der Strömungskanäle 3a bis 3d ausgebildet ist, in zwei Strömungskanäle 25a, 25b. Die Strömungskanäle 25a, 25b münden in die Ausgänge 9, 10.

Die Strömungskanäle 3a, 3b können im Bereich der Mischkammer 21 durch Verschwenken der Temperaturmischklappe 50 wahlweise geöffnet oder verschlossen werden. Die Drehachse 52 der Temperaturmischklappe 50 ist parallel zur Drehachse 12 der Verteilerklappe 4. Entsprechendes gilt für die zur Trennwand 30 symmetrische Anordnung der Temperaturmischklappe 51 und deren Drehachse 53, welche mit den Strömungskanälen 3c und 3d in Verbindung ist.

Aufgrund der Zahnradverbindung zwischen den Verteilerklappen 4 und 5 (siehe hierzu auch Fig. 2) verschwenken bei einer Drehung von Zahnrad 17 oder von Zahnrad 18 die Verteilerklappen 4, 5 gegensinnig. Ein Verschwenken der Verteilerklappen 4, 5 bewirkt ein Öffnen oder Verschließen der an die Mischkammer 21 angrenzenden Mischkammer-Auslässe, die über Strömungskanäle mit den Ausgängen 7, 8, 9, 10 des Gehäuses 2 verbunden sind.

In Fig. 5 ist eine schematische Schnittansicht von der Seite entlang der Schnittlinie A-A in Fig. 6 für eine erfindungsgemäße Heiz- oder Klimaanlage dargestellt. Dem Frontklimagerät 45 wird Außenluft über einen Strömungskanal (nicht dargestellt) zugeführt und anschließend mit Hilfe eines Heizkörpers 40 und/oder eines Verdampfers 42 klimatisiert. Für die Klimatisierung des Fahrzeugfonds wird jeweils ein Teilluftstrom direkt vom Heizkörper 40 und/oder vom Verdampfer 42 abgezweigt, und dieser jeweils über getrennte Strömungskanäle für Kaltluft 3a und für Warmluft 3b dem Temperaturmisch-und Luftverteilerelement 1 im Fond des Fahrzeugs zugeführt. Je nach Stellung der Klappen der Klappenanordnung in dem Temperaturmisch- und Luftverteilerelement 1 wird dann ein klimatisch aufbereiteter Luftstrom an einen Fußbereich im Fond, welcher vom Strömungskanal F gespeist wird, und/oder an einen Bereich zur Belüftung des Fonds G abgegeben.

Fig. 6 zeigt in schematischer Darstellung eine Draufsicht der Heiz- oder Klimaanlage gemäß Fig. 5. Der Heizkörper 40 und der Verdampfer 42 sorgen für eine Klimatisierung des Frontbereichs 48 des Fahrzeugs, sowie für die Bereitstellung der Luftströme für das Temperaturmisch- und Luftverteilerelement 1 im Fondbereich. Die klimatisierte Luft tritt dort in Abhängigkeit von der Stellung der Klappen der Klappenanordnung über die Ausgänge für einen Fußbereich des Fonds H, I (links und rechts) und/oder die Ausgänge für eine Belüftung des Fonds G aus.

## Patentansprüche

1. Heiz- oder Klimaanlage, insbesondere für den Einsatz in einem Kraftfahrzeug, mit einem Wärmetauscher (40, 42), einem Temperaturmisch- und Luftverteilerelement (1), wenigstens einem Strömungskanal für Kaltluft (3a) und wenigstens einem Strömungskanal für Warmluft (3b) zwischen dem Wärmetauscher (40, 42) und dem Temperaturmisch- und Luftverteilerelement (1), wobei das Temperaturmisch - und Luftverteilerelement (1) einen ersten Ausgang (7), einen zweiten Ausgang (9) und eine Klappenanordnung mit einer Temperaturmischklappe (6) aufweist, wobei die Temperaturmischklappe (6) in eine erste Endstellung, in der der Strömungskanal für Kaltluft (3a) verschlossen ist, in eine zweite Endstellung, in der der Strömungskanal für Warmluft (3b) verschlossen ist, sowie eine Zwischenstellung, in der der Strömungskanal für Kaltluft (3a) und der Strömungskanal für Warmluft (3b) jeweils nur teilweise verschlossen sind, bewegt werden kann, und dass das Temperaturmisch- und Luftverteilerelement (1) weiter eine mit der Temperaturmischklappe (6) gekoppelte Verteilerklappe (4) aufweist, **dadurch gekennzeichnet, dass** diese Verteilerkappe (4) in eine erste Endstellung, eine zweite Endstellung sowie eine Zwischenstellung bewegt werden kann, wobei in der ersten Endstellung der Temperaturmischklappe (6) der zweite Ausgang (9) von der Verteilerklappe (4) verschlossen ist, in der zweiten Endstellung der Temperaturmischklappe (6) der erste Ausgang (7) verschlossen ist, und in der Zwischenstellung der Temperaturmischklappe (6) die Verteilerklappe (4) eine Zwischenstellung einnimmt, in der der erste und zweite Ausgang (7, 9) jeweils nur teilweise verschlossen ist.

2. Heiz- oder Klimaanlage gemäß Anspruch 1, **dadurch gekennzeichnet, dass** sie mehrere Strömungskanäle für Warmluft (3a, 3d) und/oder mehrere Strömungskanäle für Kaltluft (3b, 3b) aufweist.

3. Heiz- oder Klimaanlage gemäß Anspruch 2, **dadurch gekennzeichnet, dass** je ein Strömungskanal für Warmluft (3b) und ein Strömungskanal für Kaltluft (3a) wechselweise durch dieselbe Temperaturmischklappe (6) verschließbar ist.

4. Heiz- oder Klimaanlage gemäß einem der vorherigen Ansprüche, **dadurch gekennzeichnet, dass** wenigstens zwei Verteilerklappen (4, 5) der Klappenanordnung derart miteinander gekoppelt sind, dass diese wenigstens zwei Verteilerklappen (4, 5) der Klappenanordnung sich gegensinnig zueinander bewegen.

5. Heiz- oder Klimaanlage gemäß einem der vorherigen Ansprüche, **dadurch gekennzeichnet, dass** das Temperaturmisch- und Luftverteilerelement (1) mehrere erste Ausgänge (7, 8) und/oder mehrere zweite Ausgänge (9, 10) aufweist.

6. Heiz- oder Klimaanlage gemäß Anspruch 5, **dadurch gekennzeichnet, dass** je ein erster Ausgang (7) und ein zweiter Ausgang (9) wechselweise durch dieselbe Verteilerklappe (4) verschließbar sind.

7. Heiz- oder Klimaanlage gemäß einem der vorherigen Ansprüche, **dadurch gekennzeichnet, dass** die Verteiler- und Temperaturmischklappen (4, 5, 6) der Klappenanordnung um je eine Drehachse (12, 13, 14) schwenkbar sind, um die Ausgänge (7, 9) bzw. die Strömungskanäle für Kalt- und Warmluft (3a, 3b) zu verschließen.

8. Heiz- oder Klimaanlage gemäß einem der vorherigen Ansprüche, **dadurch gekennzeichnet, dass** die Drehbewegungen von wenigstens zwei Klappen der Klappenanordnung über ein Getriebe miteinander gekoppelt sind.

9. Heiz- oder Klimaanlage gemäß einem der vorherigen Ansprüche, **dadurch gekennzeichnet, dass** in der ersten Endstellung der Verteilerklappe (4) ein Luftstrom in eine erste Abgaberichtung und in der zweiten Endstellung der Verteilerklappe (4) ein Luftstrom in eine zweite Abgaberichtung gelenkt wird, wobei die erste Abgaberichtung und die zweite Abgaberichtung verschieden sind.

10. Heiz- oder Klimaanlage gemäß einem der vorherigen Ansprüche, **dadurch gekennzeichnet, dass** eine oder mehrere Klappen der Klappenanordnung im Wesentlichen die Form eines Segments eines geschlossenen Hohlzylinders aufweisen.

11. Fahrzeug mit einer Heiz- oder Klimaanlage gemäß einem der vorhergehenden Ansprüche, **dadurch gekennzeichnet dass** der erste Ausgang (7) in einen Fußbereich des Fonds mündet.

12. Fahrzeug mit einer Heiz- oder Klimaanlage gemäß einem der vorhergehenden Ansprüche, **dadurch gekennzeichnet dass** der zweite Ausgang (9) in einen Belüftungsbereich des Fonds mündet.

13. Fahrzeug mit einer Heiz- oder Klimaanlage gemäß einem der vorhergehenden Ansprüche, **dadurch gekennzeichnet dass** das Temperaturmisch- und Luftverteilerelement (1) in einem Fondbereich des Fahrzeugs angeordnet ist.

## Claims

1. Heating or air-conditioning system, in particular for use in a motor vehicle, having a heat exchanger (40, 42), a temperature mixing and air distributor element (1), at least one flow channel for cold air (3a) and at least one flow channel for hot air (3b) between the heat exchanger (40, 42) and the temperature mixing and air distributor element (1), wherein the temperature mixing and air distributor element (1) has a first outlet (7), a second outlet (9), and a flap arrangement having a temperature mixing flap (6), wherein the temperature mixing flap (6) can be moved into a first end position, in which the flow channel for cold air (3a) is closed, into a second end position, in which the flow channel for hot air (3b) is closed, and an intermediate position, in which the flow channel for cold air (3a) and the flow channel for hot air (3b) are each only partially closed, and the temperature mixing and air distributor element (1) also has a distributor flap (4) coupled to the temperature mixing flap (6), **characterized in that** this distributor flap (4) can be moved into a first end position, a second end position, and an intermediate position, wherein, in the first end position of the temperature mixing flap (6), the second outlet (9) is closed by the distributor flap (4), in the second end position of the temperature mixing flap (6), the first outlet (7) is closed, and in the intermediate position of the temperature mixing flap (6), the distributor flap (4) assumes an intermediate position, in which the first and second outlets (7, 9) are each only partially closed.

2. Heating or air-conditioning system according to claim 1, **characterized in that** it has multiple flow channels for hot air (3a, 3d) and/or multiple flow channels for cold air (3b, 3b).

3. Heating or air-conditioning system according to claim 2, **characterized in that** one flow channel for hot air (3b) and one flow channel for cold air (3a) are each alternately closable by the same temperature mixing flap (6).

4. Heating or air-conditioning system according to one of the preceding claims, **characterized in that** at least two distributor flaps (4, 5) of the flap arrangement are coupled to one another in such a manner that these at least two distributor flaps (4, 5) of the flap arrangement move in opposite directions to one another.

5. Heating or air-conditioning system according to one of the preceding claims, **characterized in that** the temperature mixing and air distributor element (1) has multiple first outlets (7, 8) and/or multiple second outlets (9, 10).

6. Heating or air-conditioning system according to claim 5, **characterized in that** a first outlet (7) and a second outlet (9) are each alternately closable by the same distributor flap (4).

7. Heating or air-conditioning system according to one of the preceding claims, **characterized in that** the distributor and temperature mixing flaps (4, 5, 6) of the flap system are each pivotable around a rotational axis (12, 13, 14) to close the outlets (7, 9) or the flow channels for cold and hot air (3a, 3b).

8. Heating or air-conditioning system according to one of the preceding claims, **characterized in that** the rotational movements of at least two flaps of the flap arrangement are coupled to one another via a gearing.

9. Heating or air-conditioning system according to one of the preceding claims, **characterized in that**, in the first end position of the distributor flap (4), an air stream is guided in a first delivery direction and, in the second end position of the distributor flap (4), an air stream is guided in a second delivery direction, wherein the first delivery direction and the second delivery direction are different.

10. Heating or air-conditioning system according to one of the preceding claims, **characterized in that** one or more flaps of the flap arrangement substantially have the shape of a segment of a closed hollow cylinder.

11. Vehicle having a heating or air-conditioning system according to one of the preceding claims, **characterized in that** the first outlet (7) opens into a foot region of the back seat.

12. Vehicle having a heating or air-conditioning system according to one of the preceding claims, **characterized in that** the second outlet (9) opens into a ventilation region of the back seat.

13. Vehicle having a heating or air-conditioning system according to one of the preceding claims, **characterized in that** the temperature mixing and air distributor element (1) is arranged in a back seat region of the vehicle.

## Revendications

1. Système de chauffage ou de climatisation, en particulier pour l'utilisation dans un véhicule automobile, comprenant un échangeur de chaleur (40, 42), un élément mélangeur de température et répartiteur d'air (1), au moins un conduit d'écoulement pour de l'air froid (3a) et au moins un conduit d'écoulement pour de l'air chaud (3b) entre l'échangeur de chaleur (40, 42) et l'élément mélangeur de température et répartiteur d'air (1), où l'élément mélangeur de température et répartiteur d'air (1) présente une première sortie (7), une deuxième sortie (9) et un agencement de volets comportant un volet mélangeur de température (6), où le volet mélangeur de température (6) peut être déplacé dans une première position de fin de course dans laquelle le conduit d'écoulement pour de l'air froid (3a) est fermé, dans une deuxième position de fin de course dans laquelle le conduit d'écoulement pour de l'air chaud (3b) est fermé, ainsi que dans une position intermédiaire dans laquelle le conduit d'écoulement pour de l'air froid (3a) et le conduit d'écoulement pour de l'air chaud (3b) sont respectivement fermés seulement de façon partielle, et en ce que l'élément mélangeur de température et répartiteur d'air (1) présente en outre un volet répartiteur (4) couplé au volet mélangeur de température (6),
**caractérisé en ce que** ce volet répartiteur (4) peut être déplacé dans une première position de fin de course, dans une deuxième position de fin de course ainsi que dans une position intermédiaire, où, dans la première position de fin de course du volet mélangeur de température (6), la deuxième sortie (9) est fermée par le volet répartiteur (4), dans la deuxième position de fin de course du volet mélangeur de température (6), la première sortie (7) est fermée et, dans la position intermédiaire du volet mélangeur de température (6), le volet répartiteur (4) prend une position intermédiaire dans laquelle les première et deuxième sorties (7, 9) sont respectivement fermées seulement de façon partielle.

2. Système de chauffage ou de climatisation selon la revendication 1, **caractérisé en ce qu'**il présente plusieurs conduits d'écoulement pour de l'air chaud (3a, 3d) et / ou plusieurs conduits d'écoulement pour de l'air froid (3b, 3c).

3. Système de chauffage ou de climatisation selon la revendication 2, **caractérisé en ce qu'**un conduit d'écoulement pour de l'air chaud (3b) et un conduit d'écoulement pour de l'air froid (3a) peuvent à chaque fois être fermés alternativement par ce même volet mélangeur de température (6).

4. Système de chauffage ou de climatisation selon l'une quelconque des revendications précédentes, **caractérisé en ce qu'**au moins deux volets répartiteurs (4, 5) de l'agencement de volets sont couplés l'un à l'autre de manière telle, que ces volets répartiteurs (4, 5) - au moins au nombre de deux - de l'agencement de volets puissent se déplacer en sens inverse l'un par rapport à l'autre.

5. Système de chauffage ou de climatisation selon l'une quelconque des revendications précédentes, **caractérisé en ce que** l'élément mélangeur de température et répartiteur d'air (1) présente plusieurs premières sorties (7, 8) et / ou plusieurs deuxièmes sorties (9, 10).

6. Système de chauffage ou de climatisation selon la revendication 5, **caractérisé en ce qu'**une première sortie (7) et une deuxième sortie (9) peuvent à chaque fois être fermées alternativement par ce même volet répartiteur (4).

7. Système de chauffage ou de climatisation selon l'une quelconque des revendications précédentes, **caractérisé en ce que** les volets répartiteurs et mélangeurs de température (4, 5, 6) de l'agencement de volets peuvent pivoter à chaque fois autour d'un axe de rotation (12, 13, 14), pour fermer les sorties (7, 9) ou les conduits d'écoulement prévus pour de l'air froid et chaud (3a, 3b).

8. Système de chauffage ou de climatisation selon l'une quelconque des revendications précédentes, **caractérisé en ce que** les mouvements de rotation d'au moins deux volets de l'agencement de volets sont couplés l'un à l'autre par un mécanisme à engrenages.

9. Système de chauffage ou de climatisation selon l'une quelconque des revendications précédentes, **caractérisé en ce que**, dans la première position de fin de course du volet répartiteur (4), un flux d'air est dirigé dans une première direction de diffusion et, dans la deuxième position de fin de course du volet répartiteur (4), un flux d'air est dirigé dans une deuxième direction de diffusion, où la première direction de diffusion et la deuxième direction de diffusion sont différentes.

10. Système de chauffage ou de climatisation selon l'une quelconque des revendications précédentes, **caractérisé en ce qu'**un ou plusieurs volets de l'agencement de volets présentent sensiblement la forme d'un segment d'un cylindre creux fermé.

11. Véhicule équipé d'un système de chauffage ou de climatisation selon l'une quelconque des revendications précédentes, **caractérisé en ce que** la première sortie (7) débouche dans une zone pour les pieds, prévue à l'arrière.

12. Véhicule équipé d'un système de chauffage ou de climatisation selon l'une quelconque des revendications précédentes, **caractérisé en ce que** la deuxième sortie (9) débouche dans une zone de ventilation prévue à l'arrière.

13. Véhicule équipé d'un système de chauffage ou de climatisation selon l'une quelconque des revendications précédentes, **caractérisé en ce que** l'élément mélangeur de température et répartiteur d'air (1) est disposé dans un secteur arrière du véhicule.
